# EUROPÄISCHE PATENTSCHRIFT

(11) **EP 2 952 329 B1**
(45) Veröffentlichungstag und Bekanntmachung des Hinweises auf die Patenterteilung: **07.08.2019**
(21) Anmeldenummer: 15168567.4
(22) Anmeldetag: 21.05.2015
(51) Int. Cl.: B29C 51/00

(54) **VERFAHREN ZUR HERSTELLUNG EINER SCHUBLADENZARGE UND SCHUBLADENZARGE**
METHOD FOR PRODUCING A DRAWER FRAME AND DRAWER FRAME
PROCÉDÉ DE FABRICATION D'UN CHÂSSIS DE TIROIR ET CHÂSSIS DE TIROIR

(30) Priorität: 03.06.2014 DE 102014107801
(43) Veröffentlichungstag der Anmeldung: 09.12.2015
(73) Patentinhaber: Grass GmbH, 6973 Höchst (AT)
(72) Erfinder: Stellberger, Thomas, 5221 Lochen (AT)
(74) Vertreter: Otten, Roth, Dobler & Partner mbB Patentanwälte

(56) Entgegenhaltungen:
- CH-A5- 665 107
- DE-U1- 20 102 577
- FR-A1- 2 175 568
- Peter Schwarzmann: "Thermoformen in der Praxis", Thermoformen in der Praxis, 31. Oktober 2008 (2008-10-31), XP055216997, ISBN: 978-3-44-640794-7 Gefunden im Internet: URL:http://www.illig.de/fileadmin/media/PD F_Prospekte/Fachbuecher/Illig_Thermoformen _in_der_Praxis_2_Auszug.pdf [gefunden am 2015-09-29]
- Unknown: "Schubkasten und Frontauszug -alle Artikel der oben stehenden Kategorie(n) Topco Holz-Schubkasten SE-50 Topco Holz-Schubkasten SE-51", , 29 May 2013 (2013-05-29), XP055479681, Retrieved from the Internet: URL:https://web.archive.org/web/2013052904 2042/http://www.beschlaege-online.ch/mobel beschlage/kuchenausstattung/schubkasten-un d-frontauszug.html [retrieved on 2018-05-30]

## Beschreibung

Die Erfindung betrifft ein Verfahren zur Herstellung einer Schubladenzarge nach dem Oberbegriff des Anspruchs 1 sowie eine Schubladenzarge hergestellt nach einem solchen Verfahren.

### Stand der Technik

Aus dem Stand der Technik sind viele Möglichkeiten der Herstellung von Schubladenzargen bekannt. Beispielsweise werden aus Holz gefertigte Schubladenzargen oder aus einem Blechbiegeteil hergestellte Schubladenzargen, sogenannte Hohlkammerzargen häufig verwendet. Außerdem sind, wie in DE 201 02 577 U1, CH 665 107 A5 und FR 2 175 568 A1 beschrieben, Schubladenzargen aus einer thermogeformten Kunststoffplatte bekannt, wobei die komplette Schubladenwanne einschließlich Seitenwände, Rückwand und Boden einstückig hergestellt wird.

### Aufgabe und Vorteile der Erfindung

Der Erfindung liegt die Aufgabe zu Grunde, die Herstellungsmöglichkeiten einer Schubladenzarge zu erweitern. Diese Aufgabe wird durch den Gegenstand der Ansprüche 1 und 7 gelöst.

Die Erfindung geht zunächst von einem Verfahren zur Herstellung einer Schubladenzarge aus, mit welcher ein Stauraum in einer Schublade seitlich begrenzt wird. Erfindungsgemäß wird hierzu eine Kunststoffplatte bis zur Verformbarkeit erwärmt und dann durch einen Unterdruck in eine Form gezogen, die der Zargenform entspricht.

Bei der Schubladenzarge handelt es sich um eine Seitenwand der Schublade. Die Form, in welche die Kunststoffplatte gezogen wird, entspricht vorzugsweise exakt als Negativkontur der Außenform der Zarge. Bislang werden Schubladenzargen aus Metall oder Holz hergestellt, jedenfalls nicht in einem Thermoformverfahren. Mit einem solchen Verfahren wird es möglich in einfacherweise vielfältige Oberflächen, insbesondere hinsichtlich Farbe, Motiv und/oder Struktur zur Verfügung zu stellen. Somit lässt sich die Seitenzarge in einfacherweise an verschiedensten Designanforderungen anpassen, ohne beträchtlichen Kostenaufwand. Mit den heutigen gängigen Kunststoffen lassen sich zudem stabile, beständige und widerstandsfähige Oberflächen erzeugen.

Weiterhin ist es bevorzugt, wenn die Kunststoffplatte bis zu ihrer elastische Verformbarkeit erwärmt wird. Darüber hinaus vorteilhaft ist es, wenn die Kunststoffplatte vor dem in die Form ziehen durch eine Beaufschlagung mit Druckluft in eine zur Form entgegengesetzte Richtung vorgestreckt wird. Insbesondere wird die Kunststoffplatte dabei aufgewölbt und dann in die zur Wölbung entgegengesetzte Richtung in die Form gezogen, zum Beispiel durch einen anliegenden Unterdruck. Vorzugsweise erfolgt auch dieser Vorgang innerhlab des elastischen Bereichs. Durch das Vorstrecken wird erreicht, dass sich die Kunststoffplatte beim in die Form ziehen besonders gleichmäßig anlegt und dehnt, bei Verringerung der Wandstärke.

In einer weiteren besonderen Ausgestaltung der Erfindung wird nach dem in die Form ziehen der Kunststoffplatte eine Kühlung der geformten Platte durchgeführt. Nach dem Kühlen kann die geformte Platte, die jetzt die Form der Zarge aufweist, aus der Form entnommen werden.

Zur Erwärmung der Kunststoffplatte vor dem, zum Beispiel Vorstrecken und anschließend in die Form ziehen ist es weiterhin vorteilhaft, wenn die Kunststoffplatte mit einem Wärmestrahler erwärmt wird. Insbesondere werden zwei gegenüberliegende Wärmestrahler eingesetzt, die entsprechend gegenüberliegende Seiten der Platte, insbesondere gleichmäßig erwärmen. Auf diese Weise wird vermieden, dass in der Platte durch unterschiedliche Erwärmung zum Beispiel Spannungen entstehen, die gegebenenfalls zu einer Gefügeveränderung und/oder einem inhomogenen Verhalten beim Tiefziehen führen könnten.

Als Kunststoffplattenmaterial können verschiedene Materialien zum Einsatz kommen, zum Beispiel ABS, PMMA, ASA, PC, PS und/oder Blends, also Mischungen hieraus. ABS ist ein synthetisches Terpolymer und steht für Acrylnitril-Butadien-Styrol-Copolymerisat. PMMA ist die Kurzform von Polymethylmethacrylat. ASA steht für Acrylester-Styrol-Acrylnitril. PC ist das Akronym für Polycarbonat, umgangssprachlich Acrylglas oder Plexiglas. Schließlich ist PS die Abkürzung für Polystyrol.

Ein Ausführungsbeispiel der Erfindung ist unter Angabe weiterer Vorteile und Einzelheiten mit Bezug auf die nachstehenden Figuren näher erläutert.

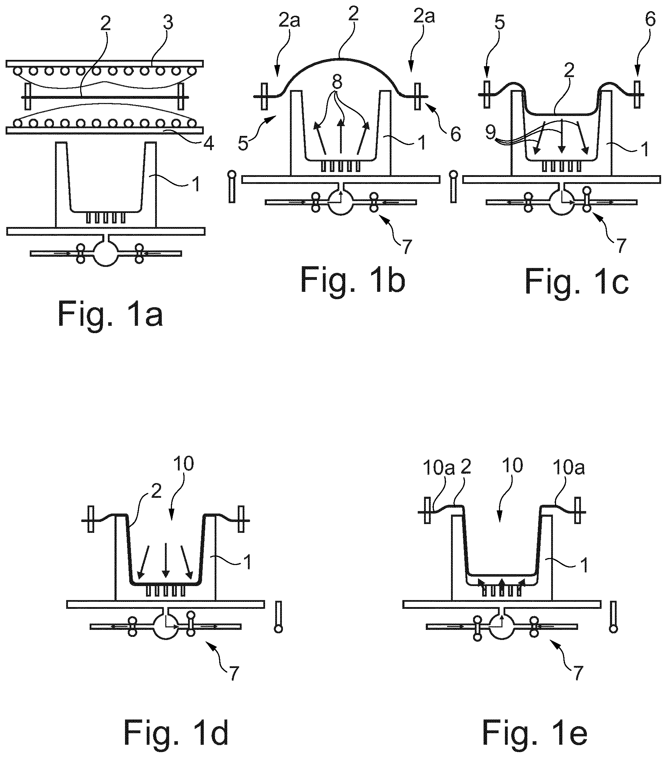

Es zeigen
- Figur 1a bis 1e: 5 Prinzipdarstellungen in jeweils schematischer Seitenansicht zur Verdeutlichung der Herstellungsschritte einer Schubladenzarge gemäß dem erfindungsgemäßen Verfahren.

In Figuren 1a bis 1d ist jeweils eine Form 1 schematisch abgebildet, die der exakten Negativkontur der gewünschten Schubladenzarge 10 entspricht.

Zunächst wird eine Kunststoffplatte 2 über beidseitig angeordnete Wärmestrahler 3, 4 erwärmt, bis eine elastische Verformbarkeit der Kunststoffplatte 2 erreicht ist.

Anschließend wird die Kunststoffplatte 2 über der Form 1 im Randbereich der Kunststoffplatte 2 über Fixiermittel 5, 6 fixiert und abgedichtet, gasdicht gehalten (siehe Figur 1b). Dann wird über ein Leitungssystem 7 Druckluft zugeführt, symbolisiert durch die Pfeile 8 in Figur 1b, wodurch die Kunststoffplatte 2 unter Aufwölbung in eine zur Form 1 entgegensetzte Richtung vorgestreckt wird, bei vorzugsweise elastischem Verhalten der Kunststoffplatte 2.

Anschließend wird das Leitungssystem 7 umgestellt und Unterdruck angelegt, symbolisiert durch die Pfeile 9 in Figur 1c, wodurch die Kunststoffplatte 2 in die Form 1 gezogen wird, bis sie überall an der Innenwandung der Form 1 anliegt (siehe Figur 1d). Jetzt hat die Kunststoffplatte 2 im Querschnitt bereits die Form einer gewünschten Schubladenzarge 10.

Wenn der Prozess von in die Formziehen abgeschlossen ist, wird die Form 1 vorzugsweise gekühlt, das Leitungssystem 7 wiederum umgestellt, um die im Wesentlichen fertiggestellte Schubladenzarge 10 auszustoßen (siehe Figur 1e) und für eine Weiterverarbeitung zu entnehmen.

Vorzugsweise hat damit die Oberfläche der Schubladenzarge den Endzustand. Lediglich Randbereiche 10a müssen gegebenenfalls noch abgetrennt werden, um die endgültige Form bei bereits fertiggestellter Oberfläche zu erhalten.

Damit lassen sich Schubladenzargen in einer Vielfalt von Farben, Formen und Oberflächenstrukturen vergleichsweise kostengünstig erzeugen.

### Bezugszeichenliste:

- 1: Form
- 2: Kunststoffplatte
- 2a: Randbereich
- 3: Wärmestrahler
- 4: Wärmestrahler
- 5: Fixiermittel
- 6: Fixiermittel
- 7: Leistungssystem
- 8: Pfeil
- 9: Pfeil
- 10: Schubladenzarge
- 10a: Randbereich

## Patentansprüche

1. Verfahren zur Herstellung einer einzelnen Schubladenzarge (10) für eine Schublade, wobei die Schubladenzarge geeignet ist, den Stauraum in einer Schublade seitlich zu begrenzen und eine Seitenwand einer Schublade zu bilden, **dadurch gekennzeichnet, dass** eine Kunststoffplatte (2) bis zur Verformbarkeit erwärmt und dann durch einen Unterdruck in eine Form (1) gezogen wird, die der Zargenform entspricht, wobei die Schubladenzarge (10) zwei sich gegenüberliegende Seitenwände und eine Oberseite aufweist, wobei die Oberseite die zwei Seitenwände miteinander verbindet und wobei die Seitenwände sich in eine Zargenhöhe gleich weit erstrecken, sodass die Schubladenzarge in einer Seitenansicht eine U-Form aufweist.

2. Verfahren nach Anspruch 1, **dadurch gekennzeichnet, dass** die Kunststoffplatte (2) bis zu ihrer elastischen Verformbarkeit erwärmt wird.

3. Verfahren nach Anspruch 1 oder 2, **dadurch gekennzeichnet, dass** die Kunststoffplatte (2) vor dem in die Form Ziehen durch eine Beaufschlagung mit Druckluft in eine zur Form (1) entgegengesetzte Richtung vorgestreckt wird.

4. Verfahren nach einem der vorhergehenden Ansprüche, **dadurch gekennzeichnet, dass** nach dem in die Formziehen der Kunststoffplatte (2) eine Kühlung der geformten Platte (2) durchgeführt wird.

5. Verfahren nach einem der vorhergehenden Ansprüche, **dadurch gekennzeichnet, dass** die Kunststoffplatte (2) mit einem Wärmestrahler (3, 4) erwärmt wird.

6. Verfahren nach einem der vorhergehenden Ansprüche, **dadurch gekennzeichnet, dass** ABS, PMMA, ASA, PC, PS und/oder Mischungen daraus als Kunststoffplattenmaterial eingesetzt werden.

7. Seitenwand einer Schublade, wobei die Seitenwand durch eine Schubladenzarge gebildet wird, **dadurch gekennzeichnet, dass** die Schubladenzarge nach einem Verfahren gemäß einem der vorhergehenden Ansprüche thermogeformt hergestellt ist.

## Claims

1. Method for producing an individual drawer frame (10) for a drawer, wherein the drawer frame is suitable for laterally delimiting the storage space in a drawer and forming a side wall of a drawer, **characterised in that** a plastic sheet (2) is heated until it is deformable and then is drawn by vacuum into a mould (1) which corresponds to the form of the frame, wherein the drawer frame (10) has two opposite side walls and an upper side, wherein the upper side connects the two side walls to one another and wherein the side walls extend equally far in frame height so that the drawer frame has a U-shape in side view.

2. Method according to claim 1, **characterised in that** the plastic sheet (2) is heated until it reaches elastic deformability.

3. Method according to claim 1 or 2, **characterised in that** the plastic sheet (2) before drawing into the mould is prestretched by pressurising with compressed air in a direction opposite the mould (1).

4. Method according to any of the preceding claims, **characterised in that** after draw-moulding the plastic sheet (2) the formed sheet (2) is cooled.

5. Method according to any of the preceding claims, **characterised in that** the plastic sheet (2) is heated by a radiant warmer (3, 4).

6. Method according to any of the preceding claims, **characterised in that** ABS, PMMA, ASA, PC, PS and/or mixtures of the latter are used as the plastic sheet material.

7. Side wall of a drawer, wherein the side wall is formed by a drawer frame, **characterised in that** the drawer frame is produced by thermoforming according to a method according to any of the preceding claims.

## Revendications

1. Procédé de fabrication d'un cadre de tiroir (10) seul pour un tiroir, le cadre de tiroir étant adapté pour délimiter latéralement l'espace de rangement dans un tiroir et pour former une paroi latérale d'un tiroir, **caractérisé en ce qu'**une feuille en plastique (2) est chauffée à la déformabilité, puis elle est étirée par sous-pression dans un moule (1) correspondant à la forme du cadre de tiroir, le cadre de tiroir (10) présentant deux parois latérales opposées et une face supérieure, la face supérieure reliant les deux parois latérales, et les parois latérales s'étendant de la même manière jusqu'à une hauteur de cadre de sorte que le cadre de tiroir présente, en vue de côté, une forme en U.

2. Procédé selon la revendication 1, **caractérisé en ce que** la feuille en plastique (2) est chauffée jusqu'à la déformabilité élastique

3. Procédé selon la revendication 1 ou 2, **caractérisé en ce que** la feuille en plastique (2), avant son étirement dans le moule, est pré-étirée dans une direction opposée au moule (1) en appliquant de l'air comprimé.

4. Procédé selon l'une des revendications précédentes, **caractérisé en ce que** la feuille moulée (2) est refroidie après que la feuille de plastique (2) a été étirée dans le moule.

5. Procédé selon l'une des revendications précédentes, **caractérisé en ce que** la feuille en plastique (2) est chauffée avec un radiateur thermique (3, 4).

6. Procédé selon l'une des revendications précédentes, **caractérisé en ce que** de l'ABS, du PMMA, de l'ASA, du PC, du PS et/ou des mélanges de ceux-ci sont utilisés comme matériau en feuille en plastique.

7. Paroi latérale d'un tiroir, la paroi latérale étant formée par un cadre de tiroir, **caractérisée en ce que** le cadre de tiroir est fabriqué par thermoformage conformément à un procédé selon l'une des revendications précédentes.
